# EUROPEAN PATENT APPLICATION

(11) **EP 3 477 902 A1**
(43) Date of publication of application: **01.05.2019**
(21) Application number: 17198431.3
(22) Date of filing: 26.10.2017
(51) Int. Cl.: H04L 29/06, H04L 9/32

(54) **RECONFIGURATION PROTECTION OF ACCESSIBLE NETWORKING DEVICES**

(71) Applicant: Televic Rail NV, 8870 Izegem (BE)
(72) Inventor: Van Put, Ludo, 9900 Eeklo (BE)
(74) Representative: IP HILLS NV

(57) **Abstract**

A networking device (100) comprising a main power supply input (111) and a redundant power supply input (112) is disclosed. The networking device is operable in a reconfiguration mode (204) in which operational parameters of the networking device are reconfigurable, and in an operation mode in which the networking device is operable according to the operational parameters. The networking device is further configured to perform the steps of i) receiving a reconfiguration instruction; and thereafter, ii) detecting whether a predefined condition occurs on the redundant power supply input within a predefined time window; and, when the predefined condition is detected, iii) entering the reconfiguration mode; and, when the predefined condition is not detected, iv) entering the operation mode.

## Description

### Field of the Invention

The present invention relates to the field of networking devices that are operable in a reconfiguration mode and in an operation mode. In the reconfiguration mode, the operational parameters of the networking device can be reconfigured and in the operation mode the networking device operates according to these operational parameters.

### Background of the Invention

In many different use cases, deployed networking devices are publicly accessible, i.e., unauthorized people can physically access the deployed networking device.

One example use case of such deployed networking devices are Wi-Fi access points and Ethernet switches for providing internet access in public places. These devices are typically mounted against the wall or the ceiling. Therefore, physical access by unauthorized people is possible. Although network access is typically protected, e.g. by an encryption key and/or authentication, the devices may still be physically reset which brings them into a default mode or reconfiguration mode. In both modes, the device may be reconfigured thereby rendering it unusable or hacked.

A second example use case is a passenger information system or, shortly, PIS. Such systems are widely implemented in public transportation vehicles such as trains, trams, metros and buses. A PIS is used to provide information to passengers that is relevant for their journey. This information is presented to the passenger by information terminals. Such a terminal can be a screen to present the information in a visual way or an audio amplifier with speaker to present the information in an audible way. The different components of the PIS are interconnected by a data network and powered by both a main and redundant power supply. As in the first example, many of these components are thus networking devices that are located in the public areas of the transport vehicle making them also vulnerable to similar unauthorized reconfiguration.

### Summary of the Invention

It is an object of the present invention, amongst others, to overcome the above identified problem and to provide a solution that facilitates centralized reconfiguration of such networking devices while providing a secure environment in which such reconfiguration can be performed.

This object is achieved, according to a first aspect of the invention, by a networking device comprising a main power supply input and a redundant power supply input; wherein the networking device is operable in a reconfiguration mode in which operational parameters of the networking device are reconfigurable, and in an operation mode in which the networking device is operable according to the operational parameters; and wherein the networking device is further configured to perform the steps of:
- receiving a reconfiguration instruction; and
- thereafter, detecting whether a predefined condition occurs on the redundant power supply input within a predefined time window;
- when the predefined condition is detected, entering the reconfiguration mode;
- when the predefined condition is not detected, entering the operation mode.

The networking device is a device that is capable of data communication over a wired and/or wireless communication network. The networking device may serve as an end node or intermediate node within such communication network. For fail safe operation, the networking device has two power inputs. In normal circumstances, the device is powered from the main power supply input. When the power is interrupted from the main supply input, the device switches to the redundant power supply input to retrieve its power. The device can be put in a reconfiguration mode in which administrative actions can be performed on the device, i.e., the operation of the device can be changed. Reconfiguration mode is sometimes also referred to as an administration mode because it allows the device to be administered. To put the device in reconfiguration mode it does not suffice to solely give the device an instruction to go into reconfiguration mode, e.g. a soft or hard reset of the device. In addition, after the instruction, a condition must be created on the redundant power supply input. Only when the device detects the condition, it will go into reconfiguration mode. Moreover, there is only a limited window of opportunity to provide the predefined condition to the device after the instruction.

Therefore, even when an unauthorized person would be able to trigger the reconfiguration instruction to the device, the device would still not be reconfigurable. For example, when someone would reset the device by toggling a power switch, by un- and repowering the device or by pushing a reset button, the device would still not enter the reconfiguration mode. It is therefore an advantage that the networking device is much better protected from unauthorized access, even if the device is physically accessible, for example when it is deployed in a public space. Moreover, as the condition is to be provided to the redundant power supply input, the device can be easily reconfigured by an authorized person in a centralized fashion, i.e. it suffices for such a person to connect in one location to the redundant power supply line in order to reconfigure one or more of such networking devices.

The reconfiguration instruction may for example be a power cycling of the power to the networking device. Advantageously, this is performed by a removal of power from both the main and redundant power supply.

This further eases the operation by authorized people because several devices are typically powered by a single power supply unit, making it possible to provide the instruction to a plurality of such networking devices at once. Moreover, while the networking device may be located in a public area, such a power supply unit is typically not, thereby providing an inherent safety against unauthorized access.

According to an embodiment, the predefined condition comprises a predefined modulation of a voltage applied at the redundant power supply input.

The power supply voltage is a DC voltage or a periodic waveform that does not convey any information. A modulation of the voltage is a variation of the properties of the redundant voltage according to a modulating signal that carries information. The predefined condition is then encoded as information into the modulating signal.

According to an embodiment, the networking device is further configured to, after entering the reconfiguration mode, perform the step of entering the operation mode after a predetermined idle period. This assures that the networking device does not remain in the reconfiguration mode, but automatically resumes to its normal operation mode. Therefore, when an unauthorized person would reset the device, it would automatically resume in operation mode.

According to an embodiment, the networking device is further configured to, when in the reconfiguration mode, receive an encryption key for encrypting and decrypting communication data.

In other words, the networking device is able to use encrypted communication with other networking device in its operation mode, but the encryption key itself is only configured in the configuration mode.

According to an embodiment, the networking device is further configured to, before receiving the reconfiguration instruction, receive from a remote networking device the predefined condition. This way, the condition itself is configurable allowing more flexibility in the reconfiguration of multiple of such networking devices. As the predefined condition is provided beforehand, i.e. in the operation mode, it can be done in a safe and secure way as provided by the operation mode. This further allows to configure the predefined condition centrally or remotely for a communication network, thereby providing easy network management capabilities.

According to an embodiment, the networking device further comprises one or more network interfaces adapted to communicate over the main and/or redundant power supply input. This has the further advantage that the network interface for detecting the predefined condition can also be used in the operation mode for network communication

According to a second aspect, the invention relates to a passenger information system comprising a networking device according to the first aspect.

The use of the networking device as end node or intermediate node in a PIS is advantageous because a PIS system typically already features a main and redundant power supply unit. Moreover, while the networking devices may be located in the public areas of a transportation vehicle, access to the power supply is not always straightforward. Moreover, while an unauthorized person may easily reboot a network device, he/she will normally not have knowledge of the predefined condition or have the technical means to provide the predefined condition.

According to a third aspect, the invention relates to a reconfiguration device configured to connect to the passenger information system according to the second aspect and configured to modulate the predefined condition on the redundant power supply input of the networking device.

In other words, a device is provided for reconfiguring the networking device according to the first aspect when deployed into a PIS. By such a device, an authorized person can easily reconfigure all networking devices in a PIS by just connecting the reconfiguration device to a redundant power line of the PIS.

According to a fourth aspect, the invention relates to a computer-implemented method for reconfiguring a networking device; the networking device comprising a main power supply input and a redundant power supply input wherein the networking device is operable in a reconfiguration mode in which operational parameters of the networking device are reconfigurable, and in an operation mode in which the networking device is operable according to the operational parameters; the method comprising the following steps:
- sending a reconfiguration instruction to the networking device; and
- thereafter, generating a predefined condition on the redundant power supply input of the networking device within a predefined time window such that the communication device enters the reconfiguration mode.

According to a fifth aspect, the invention relates to a data processing system comprising means for carrying out the method according to the fourth aspect.

According to a sixth aspect, the invention relates to a computer program product comprising instructions which, when the program is executed by a computer, cause the computer to carry out the method according to the fourth aspect.

According to a seventh aspect, the invention relates to a computer-readable storage medium comprising instructions which, when executed by a computer, cause the computer to carry out the method according to the fourth aspect.

### Brief Description of the Drawings

Fig. 1A illustrates an outside view of a networking device according to an embodiment of the invention; and
Fig. 1B illustrates a schematic top and internal view of the networking device of Fig. 1A; and
Fig. 2 illustrates steps performed by a networking device according to an embodiment of the invention; and
Fig. 3 illustrates a passenger information system according to an embodiment of the invention; and
Fig. 4 shows a plot of power supply voltages applied to a main and redundant power supply input of a networking device according to an embodiment of the invention; and
Fig. 5 illustrates a suitable computing system for performing steps according to various embodiments of the invention; and
Fig. 6 illustrates steps performed for reconfiguring the networking device of Fig. 1 according to an embodiment of the invention.

### Detailed Description of Embodiment(s)

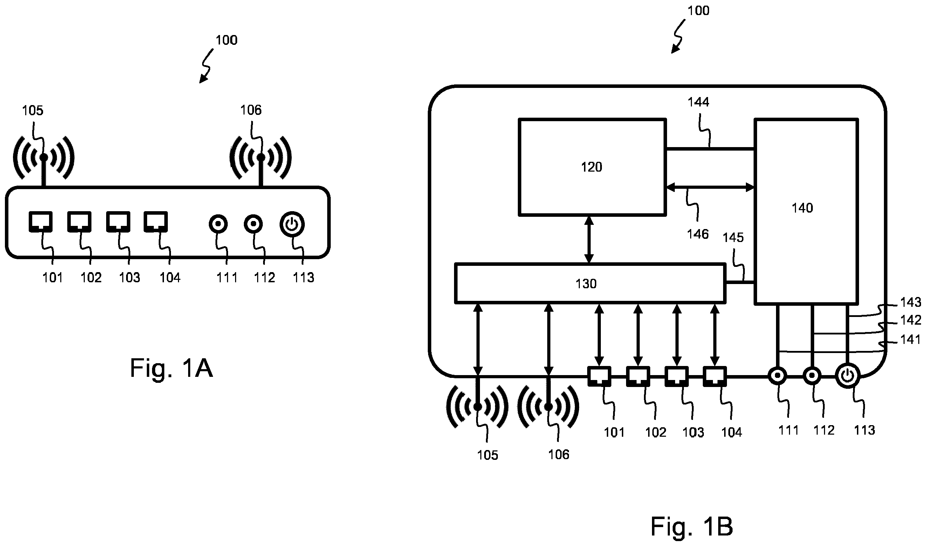

The present invention relates to the field of networking devices that are operable in a reconfiguration mode and in an operation mode. In the reconfiguration mode, the operational parameters of the networking device can be reconfigured and in the operation mode the networking device operates according to these operational parameters. Fig. 1A and Fig. 1B illustrates such a networking device 100 according to an embodiment of the invention. In Fig. 1A a side view of the networking device 100 is shown and in Fig. 1B a top view of the networking device 100 is shown with a schematic view of the internal components of the device.

Networking device 100 comprises at least one communication interface for communicating data over a communication network. The communication interface may be a wired communication interface 101-104 or a wireless communication interface 105, 106. Networking device 100 also comprises a main power supply input 111 and a redundant power supply input 112. Device 100 may further comprise a power button 113 or a reset button.

Internally, the device 100 comprises a processing unit 120, a power supply unit 140 and a network communication module 130. Power supply unit is connected to the power supply inputs 111 and 112 and may further be connected to power button 113. Power supply unit 140 powers the processing unit 120 by connection 144 and powers the network communication module 130 by connection 145. Power supply unit 140 retrieves its power primarily from main power supply input 111. When there is no power on the main power supply input, for example due to power failure, power supply unit 140 switches to redundant power supply input 112 for retrieving its power. Power supply unit 140 is further configured to detect certain predetermined conditions on the redundant power supply input 112. Advantageously, power supply unit 140 is configured to detect a modulation of the voltage supplied to the redundant power supply input 112. A modulation of the voltage is a variation of the properties of the redundant voltage according to a modulating signal that carries information. Power supply input 112 is configured to retrieve the modulating signal such that the information can retrieved, either by the power supply unit 140 itself or by the processing unit 120. Exchange of information with the processing unit 120 may be done over communication bus 146.

Networking module 130 allows processing unit 120 to transmit or receive communication data over one or more of the various communication interfaces 101-106. To this purpose, networking module 130 may partially or completely implement a communication stack. Preferably, networking module encrypts and decrypts the communication data by an encryption key in order to ensure protection of the communicated data.

The networking device 100 of Fig. 1 shows separate power supply inputs 111, 112 and wired network interfaces 101-104, but these may also be combined, i.e. wherein a network interface is also a power supply input. For example, when a wired network interface operates according to the IEEE 802.3 Ethernet standard, it may further support Power over Ethernet (PoE) according to the same standard. Both the main and redundant power supply input may then be provided by a PoE network interface. According to another example, the power supply inputs 111, 112 may also provide data communication capabilities. These techniques are often referred to as Power Line Communication or, shortly, PLC. Different techniques and standards are in existence among which the widely used HomePlug standard established by the HomePlug Powerline Alliance.

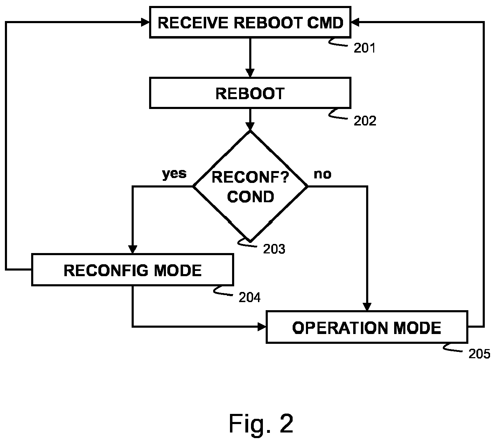

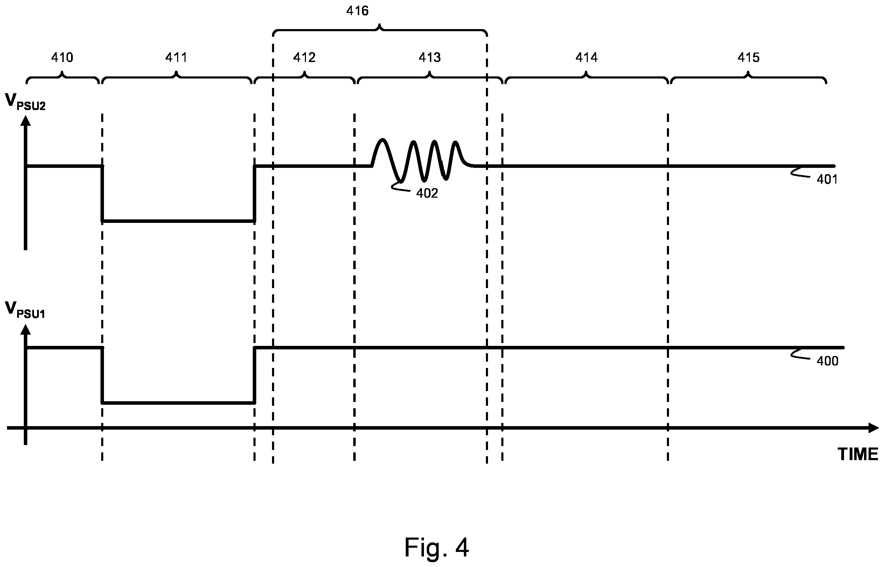

Fig. 2 illustrates steps performed by the networking device 100 according to an embodiment of the invention. Fig. 4 shows a plot of the voltage 400 at the main power supply input 111 and the voltage 401 at the redundant power supply input 112. The value of the voltages 400 and 401 is represented on the Y-axis while the time is represented on the X-axis. The steps of Fig. 2 will be further illustrated by reference to the plot of Fig. 4.

In a first step 201, the networking device 100 receives an instruction to go into the reconfiguration mode. Advantageously, such instruction is a power cycling. This may be done by removing the power from both the main and redundant power supply inputs 111, 112, toggling the power button 113 or pushing a reset button. Instead of a power cycling, the instruction may also be performed in a soft way, i.e. by remotely providing a software instruction to the processing unit 130 over one of the network interfaces 101-106. The first time period 410 in Fig. 4 illustrates the situation where the device 100 is in operation mode, i.e. when it operates as an end node or intermediate node in a communication network according to its operational parameters, i.e. according to its configurated settings, for example according to the configured encryption key. At the end of period 410, the power at both power supply inputs 111 and 112 is switched off for a period 411 and then switched back on again. This off/on switching of the power supply is an example of the receiving of the instruction to go into the reconfiguration mode.

Upon receiving the instruction in step 201, the device 100 is rebooted in step 202, i.e. at the beginning of period 412. During this rebooting, the device is configured to proceed to step 203 in which it waits for a certain condition to appear on the redundant power supply input 112 for a certain time period 416. There is thus a certain window of opportunity to provide the condition to the network device 100.

When the condition appears, as shown by the modulation 402 of the redundant power supply voltage 401, then the device proceeds to the reconfiguration mode 204 during which the operational parameters of the device 100 can be changed. The operational parameters may be exchanged directly through any kinds of inputting means such as a keyboard, mouse, screen etc. or indirectly over one of the network interfaces 101-106. The period that device 100 is in the reconfiguration mode is illustrated in Fig. 4 by time period 414. Advantageously, device 100 is further configured to exit the reconfiguration mode when no reconfiguration action is performed for a certain duration, i.e. when the device 100 stays idle during a certain time period. After exiting the reconfiguration mode, the device 100 returns back to the operation mode 206 as illustrated by the further time period 415 indicating when device 100 is back in operation mode as it was during time period 410.

In the example of Fig. 4, the redundant power supply voltage 401 is switched to its nominal supply voltage at the end of time period 411. The modulation 402 is then a superposition of the nominal supply voltage component and a signal voltage component encoding the predefined condition. Alternatively, the redundant power supply voltage 401 does not comprise the nominal voltage component but only comprises a time varying signal component corresponding to the predefined condition. Only thereafter, the redundant power supply voltage 401 is restored to its nominal supply voltage thereby functioning as a redundant power supply at the start of time period 414.

When the predefined condition does not occur during step 203 and thus during time period 416, then the device returns to the operation mode 205 and skips the reconfiguration mode 204.

Advantageously, the predefined condition is also configurable in the networking device 100. For example, the predefined condition may be provided to the networking device 100 when it is in operation mode 205, i.e. before the device is rebooted.

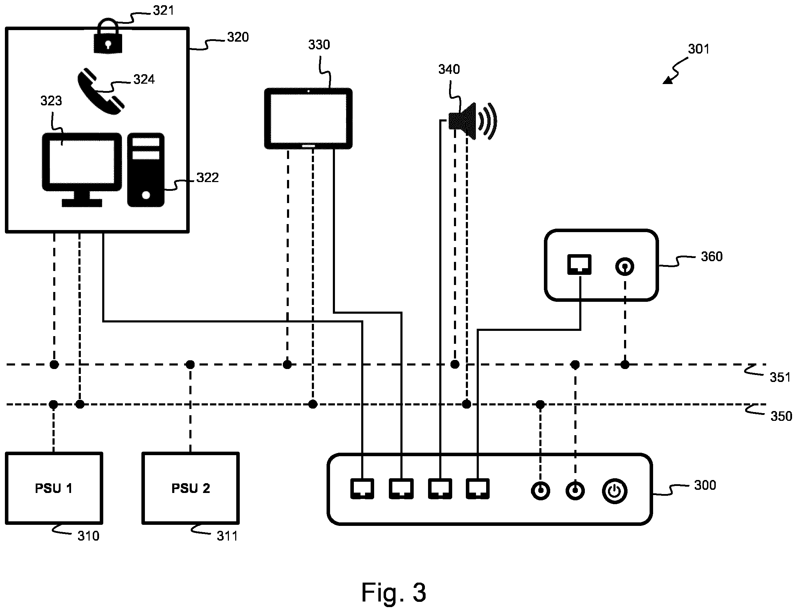

According to an embodiment, the networking device 100 may be deployed into a passenger information system or shortly PIS 301. Fig. 3 illustrates an example of a PIS 301 with a networking device 300 that comprises the same functionality as networking device 100, i.e. that is configured and equipped to perform the steps as illustrated in Fig. 2. Passenger information systems 301 are widely implemented in public transportation vehicles such as trains, trams, metros and buses. They are used to provide information to passengers that is relevant for their journey. This information is presented to the passenger by information terminals 330, 340. Such a terminal can be a screen 330 to present the information in a visual way or a speaker 340 to present the information in an audible way. A passenger information system 301 further comprises an interfacing system 320 for inputting information into the passenger information system 301. To this respect, it typically features a microphone, a telephone handset 324, a keyboard or a touch screen 323. In most public transportation vehicles, the interfacing system 320 is located within the public area of the vehicle, i.e. in a location where passengers are allowed, for example near the entrance doors. This way, an operator has quick and easy access to the passenger information system 301. In a train for example, the guard or conductor needs to be able to operate the passenger information system 301 from within at least each carriage or passenger car. To this purpose, the interfacing system 320 may be lockable by a mechanical lock 321.

The components of the PIS are interconnected by a data communication network. The components of the PIS are further powered by a main and redundant power supply unit 310 and 311. These power supplies 310 and 311 are connected to the components 320, 330, 340, 300 by respective power supply lines 350 and 351. Each of the components 300, 320, 330, 340 may be operable according to the steps as illustrated in Fig. 2, i.e. according to an operation mode 205 and a protected reconfiguration mode 204. Advantageously, data communicated over the communication network is encrypted by an encryption key. The encryption key is then an operational parameter which can be reconfigured from within the protected reconfiguration mode 204. The data communication network of the PIS 301 may comprise a switching device 300 for interconnecting all the components 320, 330, 340 of the PIS 301. Switching device 300 may for example correspond to the networking device 100.

Reconfiguration of the components of the PIS 301 may be performed by connecting a reconfiguration device 360 to the PIS 301. Reconfiguration device 360 has a first output that connects to the redundant power supply line 351. Reconfiguration device 360 is further equipped to connect to the communication network of the PIS in order to communicate with the other components of the PIS 301. When an operator of the PIS needs to reconfigure the operational parameters of the PIS such as for example the encryption key, the operator connects first the reconfiguration device 360 to the PIS 301 and disconnects the redundant power supply 311. Then all the components of the PIS are put into reconfiguration mode by rebooting the components according to step 201. Then the reconfiguration device 360 sends the predefined condition within the predefined time window 416 over the redundant power supply line 351 to all the components. Thereupon, all components will receive and verify the predefined condition and enter into the reconfiguration mode allowing the operational parameters of the components to be changed. After the reconfiguration, the components return back to the operation mode and function according to the changed operational parameters.

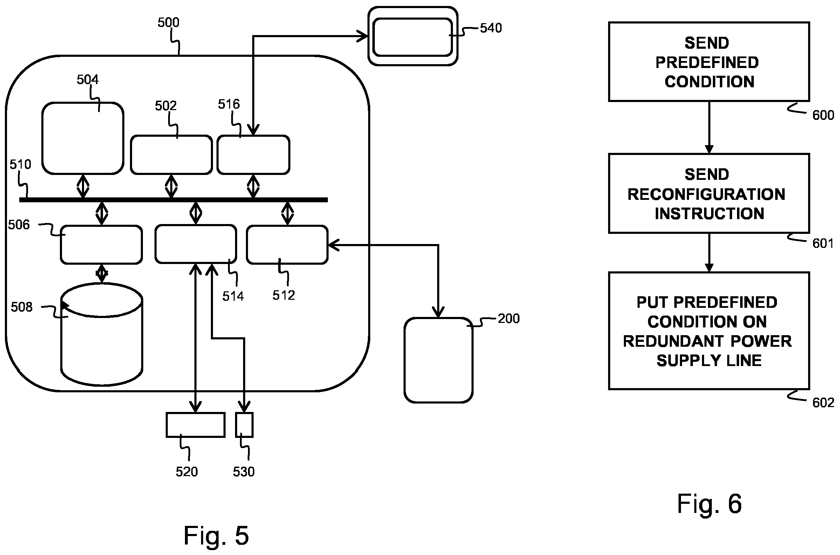

Fig. 6 illustrates steps that may be performed by reconfiguration device 360 according to an embodiment of the invention. The steps may be performed after reconfiguration device 360 has been connected to the PIS 301. In a first optional step 600, reconfiguration device 360 sends the predefined condition to all the devices in the PIS 301 when they are still in operation mode 205, for example over the data communication network. Then, in the next step 601, reconfiguration device 360 sends the instruction to go into reconfiguration mode to one or more of the communication devices in the PIS 301. Alternatively, the instruction may also be done outside the device 360, e.g. by cycling both the main and redundant power supplies 310, 311. After performing step 601, the networking devices in the PIS 301 will go in the state where they check for the predefined condition as already described with reference to step 203 of the Fig. 2 and to time period 416 of Fig. 4. Reconfiguration device 360 then proceeds to step 602 where it sends the predefined condition to the networking device by a modulation of the redundant power supply.

Fig. 5 shows a suitable computing system 500 for performing steps according to the above embodiments. Computing system 500 may thus be used as part of networking device 100, PIS devices 300, 320, 330 or reconfiguration device 360 in order to perform the steps of Fig. 2 or Fig. 6 respectively. Computing system 500 may in general be formed as a suitable general-purpose computer and comprise a bus 510, a processor 502, a local memory 504, one or more optional input interfaces 514, one or more optional output interfaces 516, at least one communication interface 512, storage element interface 506 and one or more storage elements 508. Bus 510 may comprise one or more conductors that permit communication among the components of the computing system. Processor 502 may include any type of conventional processor or microprocessor that interprets and executes programming instructions. Local memory 504 may include a random-access memory, RAM, or another type of dynamic storage device that stores information and instructions for execution by processor 502 and/or a read only memory, ROM, or another type of static storage device that stores static information and instructions for use by processor 504. Input interface 514 may comprise one or more conventional mechanisms that permit an operator to input information to the computing device 500, such as a keyboard 520, a mouse 530, a pen, voice recognition and/or biometric mechanisms, etc. Output interface 516 may comprise one or more conventional mechanisms that output information to the operator, such as a display 540, a printer 550, a speaker, etc. Communication interface 512 may comprise any transceiver-like mechanism such as for example an Ethernet interface that enables computing system 500 to communicate with other devices and/or systems of the PIS 301. The communication interface 512 of computing system 500 may be connected to such another computing system by means of a local area network, LAN. Storage element interface 506 may comprise a storage interface such as for example a Serial Advanced Technology Attachment, SATA, interface or a Small Computer System Interface, SCSI, for connecting bus 510 to one or more storage elements 508, such as one or more local disks, for example SATA disk drives, and control the reading and writing of data to and/or from these storage elements 508. Although the storage elements 508 above is described as a local disk, in general any other suitable computer-readable media such as a removable magnetic disk, optical storage media such as a CD or DVD, -ROM disk, solid state drives, flash memory cards, ... could be used.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A networking device (100, 300, 322, 330, 340) comprising a main power supply input (111) and a redundant power supply input (112); wherein the networking device is operable in a reconfiguration mode (204) in which operational parameters of the networking device are reconfigurable, and in an operation mode (205) in which the networking device is operable according to the operational parameters; and wherein the networking device is further configured to perform the steps of:
- receiving (201) a reconfiguration instruction; and
- thereafter, detecting (203) whether a predefined condition (402) occurs on the redundant power supply input within a predefined time window (416);
- when the predefined condition (402) is detected, entering the reconfiguration mode (204);
- when the predefined condition is not detected, entering the operation mode (205).

2. The networking device (100, 300, 322, 330, 340) according to claim 1 wherein the reconfiguration instruction comprises a power cycling (411) of the networking device by a removal of power from both the main and redundant power supply input (111, 112).

3. The networking device (100, 300, 322, 330, 340) according to claim 1 or 2 wherein the predefined condition comprises a predefined modulation (402) of a voltage (401) applied at the redundant power supply input (112).

4. The networking device (100, 300, 322, 330, 340) according to any one of claims 1 to 3 further configured to, after entering the reconfiguration mode (204), perform the step of entering the operation mode (205) after a predetermined idle period (414).

5. The networking device (100, 300, 322, 330, 340) according to any one of the preceding claims further configured to, when in the reconfiguration mode (204), receive an encryption key for encrypting and decrypting communication data.

6. The networking device (100, 300, 322, 330, 340) according to any one of the preceding claims further configured to, before the receiving a reconfiguration instruction, receiving from a remote networking device the predefined condition.

7. The networking device according to any one of the preceding claims further comprising one or more network interfaces adapted to communicate over the main and/or redundant power supply input.

8. Passenger information system (301) comprising a networking device (300, 330, 340, 322) according to any one of the claims 1 to 7.

9. Passenger information system (301) according to claim 8 further comprising a power supply (310) and redundant power supply (311) respectively connected to the main power supply input and the redundant power supply input of the networking device.

10. Reconfiguration device (360) configured to connect to the passenger information system (301) according to claim 9 and configured to modulate the predefined condition (402) on the redundant power supply input of the networking device.

11. A computer-implemented method for reconfiguring a networking device (100, 300, 322, 330, 340); the networking device comprising a main power supply input (111) and a redundant power supply input (112); wherein the networking device is operable in a reconfiguration mode (204) wherein operational parameters of the networking device can be reconfigured and in an operation mode (205) wherein the networking device operates according to the operational parameters; the method comprising the following steps:
- sending (601) a reconfiguration instruction (411) to the networking device; and
- thereafter, generating (602) a predefined condition (402) on the redundant power supply input (112) within a predefined time window (416) such that the communication device enters the reconfiguration mode (204).

12. A data processing system comprising means for carrying out the method of claim 11.

13. A computer program product comprising instructions which, when the program is executed by a computer, cause the computer to carry out the method of claim 11.

14. A computer-readable storage medium comprising instructions which, when executed by a computer, cause the computer to carry out the method of claim 11.
